# FASCICULE DE BREVET EUROPEEN

(11) **EP 2 111 967 B1**
(45) Date de publication et mention de la délivrance du brevet: **19.01.2011**
(21) Numéro de dépôt: 09158140.5
(22) Date de dépôt: 17.04.2009
(51) Int. Cl.: B29C 49/48, B29C 33/30, B29C 49/56

(54) **Dispositif de moulage de récipients comprenant des moyens de réglage des dimensions volumiques de la cavité de moulage**
Vorrichtung zum Formgießen von Behältern einschließlich Mittel zum Regulieren der Volumenmaße des zu formenden Hohlraums
Device for moulding containers comprising means for adjusting the volume dimensions of the moulding cavity

(30) Priorité: 21.04.2008 FR 0852663
(43) Date de publication de la demande: 28.10.2009
(73) Titulaire: Sidel Participations, 76930 Octeville Sur Mer (FR)
(72) Inventeur: Tonga, Jules, 76930 Octeville-sur-Mer (FR)
(74) Mandataire: Cabinet Plasseraud

(56) Documents cités:
- EP-A- 0 565 916
- FR-A- 2 646 802
- FR-A- 2 790 703
- FR-A- 2 813 231
- US-A- 5 968 560
- US-A1- 2004 202 746

## Description

La présente invention concerne d'une façon générale le domaine du moulage de récipients, notamment de bouteilles, en matière thermoplastique telle que du PET (polyéthylène téréphtalate) par soufflage ou étirage-soufflage de préformes chauffées.

Plus précisément, l'invention concerne des perfectionnements apportés aux dispositifs de moulage de récipients, notamment de bouteilles, en matière thermoplastique telle que du PET par soufflage ou étirage-soufflage de préformes chauffées, lesquels dispositifs de moulage comportent au moins un moule comprenant au moins deux demi-moules comportant respectivement deux supports et deux blocs de moule définissant un plan de joint en position de fermeture du moule, voir par exemple le document US 5 968 560.

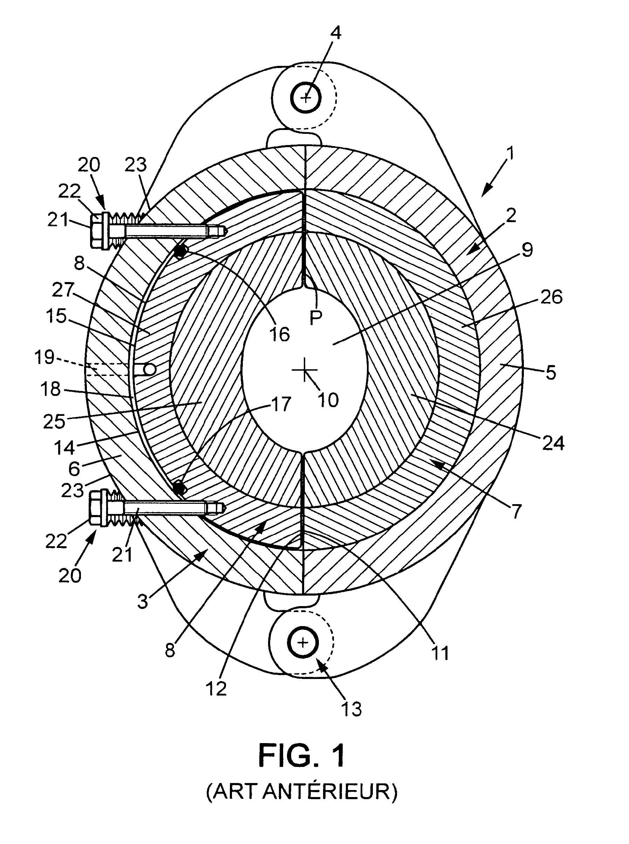

Un dispositif de moulage du type visé par l'invention est représenté schématiquement à la figure 1 des dessins annexés.

Le dispositif de moulage désigné dans son ensemble par la référence numérique 1 comprend, dans la configuration illustrée, deux demi-moules 2 et 3 respectivement propres à former l'ensemble de l'épaule, du corps et du fond des récipients ; dans une autre configuration possible, le moule peut comprendre trois éléments, à savoir deux demi-moules 2 et 3 pour former l'épaule et le corps des récipients et un fond de moule mobile verticalement pour former le fond des récipients.

Dans l'exemple illustré, le moule 1 est formé de deux demi-moules 2, 3 qui sont articulés en rotation l'un par rapport à l'autre sur un axe 4 (moule portefeuille) ; mais il doit être compris que l'invention ne vise pas exclusivement ce type de moule et peut trouver application dans des moules d'autres types, notamment des moules dans lesquels les demi-moules sont mobiles linéairement.

Les demi-moules 2, 3 comprennent deux supports 5, 6 respectivement et deux blocs 7, 8 de moule respectivement supportés par ces derniers. Dans l'exemple illustré, les blocs 7, 8 de moule présentent une section droite de forme générale sensiblement elliptique. Les deux blocs 7, 8 de moule sont creusés de deux empreintes de moulage respectives formant ensemble une cavité 9 de moulage d'axe 10. Les deux blocs 7, 8 de moule possèdent des faces coopérantes ou faces d'appui respectivement 11 et 12 qui, en position de fermeture du moule et de soufflage, sont en appui mutuel selon un plan de joint P.

Les supports 5, 6 sont agencés de manière à présenter, d'un côté (à savoir du côté de l'axe 4 d'articulation des deux demi-moules 2, 3, des oreilles saillantes (non représentées mais de type connu en soi) respectives écartées l'une de l'autre, auxquelles sont raccordés des moyens d'actionnement (ouverture - fermeture) qui peuvent être de toute configuration appropriée (également non représentés mais de type connu en soi) et, à l'opposé, des moyens de verrouillage en position de fermeture désignés globalement en 13, qui peuvent eux aussi avoir toute configuration appropriée. De tels moyens d'actionnement et de tels moyens de verrouillage sont notamment décrits dans le document FR 2 863 930 ou le document FR 2 659 265.

Un des deux demi-moules (ici le demi-moule 3 situé à gauche sur la figure 1) est agencé de manière qu'entre les faces 14, 15 d'assemblage respectives de son support 6 et de son bloc 8 de moule soit définie, par un joint 16 (logé dans une gorge 17 creusée par exemple dans la face 15 d'assemblage du bloc 8 de moule), une chambre 18 étanche dite "chambre de compensation" et de manière que ledit bloc 8 de moule soit déplaçable par rapport au support 6 sensiblement perpendiculairement à sa face 12 d'appui.

La paroi du support 6 du demi-moule 3 présentant la chambre 18 étanche est percée d'un canal 19 traversant débouchant dans la chambre 18 de compensation. Le canal 19 est raccordé (non illustré sur les figures) à une source de fluide sous haute pression. De façon pratique, le canal 19 peut être raccordé à la source de fluide de soufflage et, dans ce cas, on fait en sorte que la projection de la surface de la chambre 18 de compensation sur le plan P de joint soit supérieure à la surface de la projection de la cavité 9 de moulage sur ledit plan P de joint. Lors du soufflage, sous l'action de la pression régnant dans la chambre 18 de compensation, le bloc 8 de moule est repoussé en direction du bloc 7 de moule en vis-à-vis et sa face 12 d'appui est fortement pressée contre la face 11 d'appui du bloc 7 de moule.

Une fois le soufflage terminé, pour assurer le rappel du bloc 8 de moule dans sa position rétractée au fond du support 6 respectif, on prévoit que le bloc 8 de moule soit supporté par le support 6 respectif par l'intermédiaire de moyens 20 de rappel élastique. Une solution simple illustrée à la figure 1 consiste en ce que, pour constituer chaque moyen 20 de rappel élastique, un organe 21 de rappel élastique soit interposé entre la tête d'un tirant 22 sous la forme d'un organe de boulonnage et la face 23 externe du support 6.

De son côté, le bloc 7 de moule (situé à droite sur la figure 1) est supporté de façon fixe par le support 5 respectif.

Un moule agencé comme il vient d'être décrit en référence à la figure 1 des dessins annexés est divulgué dans le document FR 2 659 265 (la figure 1 des dessins annexés étant reprise de la figure 1 de ce document), auquel on pourra se reporter pour des explications plus complètes.

De plus, dans le type de moule plus spécifiquement visé par l'invention, chaque bloc 7, 8 de moule comprend une coquille 24, 25 dans laquelle est formée l'empreinte formant partiellement la cavité 9 de moulage et un porte-coquille 26, 27 fixé sur le support 5, 6 respectif du bloc 7, 8 de moule.

Toutefois, quand l'utilisateur d'un tel dispositif de moulage souhaite changer sa chaîne de production de récipients soufflés, notamment en modifiant les caractéristiques dimensionnelles des récipients, il est alors amené à modifier les coquilles des blocs de moule, voire même également les supports de ces blocs de moule, du fait que les caractéristiques dimensionnelles de ces coquilles peuvent être différentes en fonction des chaînes de production et/ou des dimensions de la cavité de moulage.

Il serait donc particulièrement intéressant de réaliser un dispositif de moulage permettant d'adapter facilement tout type de coquille à un même support de bloc de moule.

Pour ce faire, la présente invention porte sur un dispositif de moulage de récipients, notamment de bouteilles, en matière thermoplastique telle que du PET par soufflage ou étirage-soufflage de préformes chauffées, selon la revendication 1.

Avantageusement, la coquille comprend une surface extérieure dans laquelle est formée au moins une rainure de forme partiellement complémentaire à ladite au moins une entretoise.

Selon une forme de réalisation avantageuse, ladite au moins une entretoise comprend une partie saillante apte à se loger par complémentarité dans une rainure de la surface extérieure de la coquille ainsi qu'une partie formant interface entre ladite coquille et ledit porte-coquille.

Avantageusement, ladite partie formant interface est à épaisseur sensiblement constante.

De manière avantageuse, ladite au moins une entretoise s'étend sensiblement radialement en périphérie de la coquille.

Selon une forme de réalisation avantageuse, ladite au moins une entretoise est de forme au moins partiellement annulaire.

Avantageusement, ladite au moins une entretoise comprend une partie s'étendant sensiblement radialement fixée sur une extrémité du porte-coquille.

Toujours selon une forme de réalisation avantageuse, le dispositif de moulage selon l'invention comprend au moins une entretoise longitudinale fixée sur une coquille d'un demi-moule et apte à venir en appui contre le porte-coquille de l'autre demi-moule lors de la fermeture des deux demi-moules l'un contre l'autre.

De manière avantageuse, l'entretoise longitudinale comprend au moins une saillie apte à se loger par complémentarité dans au moins un creusement prévu dans la surface extérieure de la coquille.

Avantageusement, ladite au moins une entretoise est fixée sur la coquille et/ou sur le porte-coquille à l'aide de moyens de vissage.

La présente invention est maintenant décrite à l'aide d'un exemple uniquement illustratif et nullement limitatif de la portée de l'invention, et à partir des illustrations suivantes, dans lesquelles :
- la figure 1 est une vue en coupe transversale schématique d'un dispositif de moulage selon l'art antérieur ;
- la figure 2 est une vue de dessus partielle d'un demi-moule d'un dispositif de moulage selon l'invention ;
- la figure 3 est une vue en coupe partielle axiale selon l'axe X-X d'un demi-moule d'un dispositif de moulage selon l'invention ;
- la figure 4 est une vue en coupe axiale selon l'axe Y-Y d'un demi-moule d'un dispositif de moulage selon l'invention ;

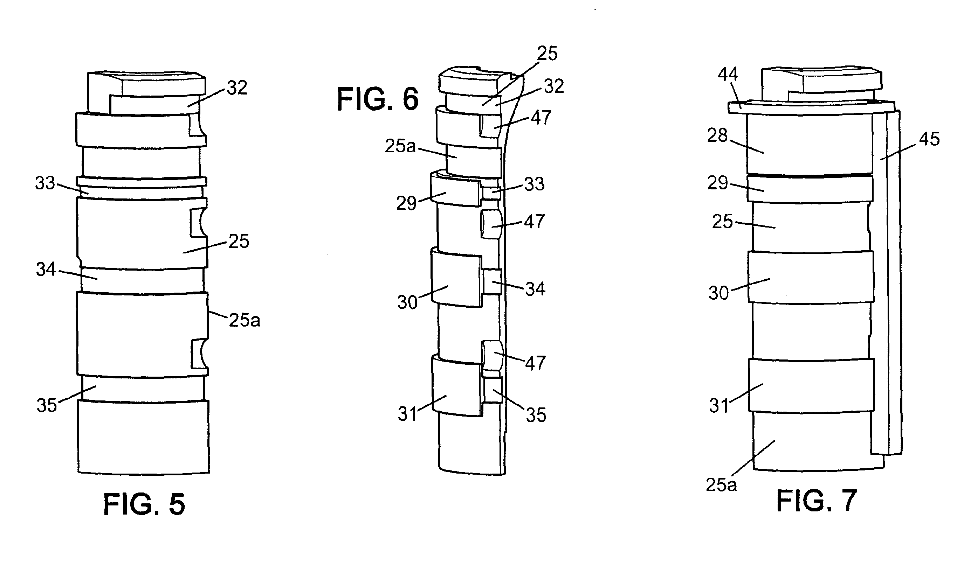

- la figure 5 est une vue partielle en perspective de la surface extérieure de la coquille selon l'invention ;
- la figure 6 est une vue partielle en perspective de la surface extérieure de la coquille sur laquelle sont fixés une partie des moyens d'entretoisement entre la coquille et le porte-coquille selon l'invention ;
- la figure 7 est une vue partielle en perspective de la surface extérieure de la coquille sur laquelle sont fixés lesdits moyens d'entretoisement selon l'invention ;
- la figure 8 est une vue partielle en perspective d'une forme de réalisation d'une entretoise entre la coquille et le porte-coquille selon l'invention ;
- la figure 9 est une vue partielle en perspective d'un demi-moule avant fixation de la coquille sur les moyens d'entretoisement selon l'invention.

Par homogénéité, les mêmes éléments porteront les mêmes numéros de référence tout au long de la description des figures.

Par ailleurs, il convient de noter que les dispositions générales de l'invention s'appliquent aussi bien à un dispositif de moulage présentant une chambre 18 de compensation telle que décrite dans la figure 1, mais peut également s'appliquer à tout type de dispositif de moulage ne présentant pas une telle chambre 18.

De plus, même si l'invention est décrite en référence à des demi-moules 2, 3 de forme générale semi-circulaire ou elliptique, il doit être compris que l'invention s'applique à des demi-moules 2, 3 ayant n'importe quel type de forme (par exemple rectangulaire).

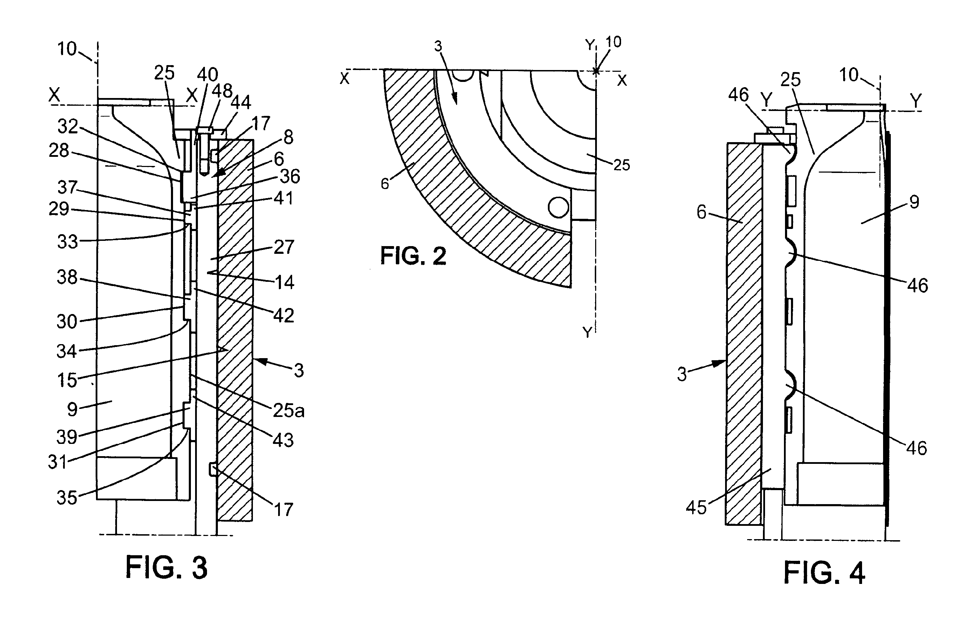

La figure 2 illustre une vue supérieure partielle d'un demi-moule 3, à savoir une moitié d'un demi-moule 3, tandis que les figures 3 et 4 représentent respectivement des vues en coupe axiale selon l'axe X-X et l'axe Y-Y du demi-moule 3.

De manière générale, la présente invention porte sur un dispositif de moulage de récipients, notamment de bouteilles, en matière thermoplastique telle que du PET par soufflage ou étirage-soufflage de préformes chauffées, lequel dispositif de moulage comportant au moins un moule 1 comprenant au moins deux demi-moules 2, 3 comportant respectivement deux supports 5, 6 et deux blocs 7, 8 de moule définissant un plan P de joint en position de fermeture du moule, chaque bloc 7, 8 de moule comprenant une coquille 24, 25 dans laquelle est réalisée une empreinte formant partiellement la cavité 9 de moulage et un porte-coquille 26, 27 fixé sur le support 5, 6 respectif du bloc 7, 8 de moule.

Il peut être remarqué sur la figure 3 la présence d'au moins une entretoise 28, 29, 30, 31 amovible entre la coquille 25 et le porte-coquille 27, ce grâce à quoi la modification des caractéristiques dimensionnelles de la cavité 9 de moulage peut être réalisée sans nécessité d'intervention sur le support 5 et le porte-coquille 27.

Il doit être compris que, bien qu'il soit représenté et décrit sur les figures uniquement la présence d'entretoise entre la coquille 25 et le porte-coquille 27, au moins une entretoise est également prévue de manière analogue entre la coquille 24 et le porte-coquille 26.

De manière à permettre la coopération de l'entretoise 28, 29, 30, 31 avec la coquille 25, il est prévu qu'il soit formé dans la surface 25a extérieure de la coquille 25 (c'est-à-dire la surface opposée à la surface de la coquille 25 formant partiellement la cavité 9 de moulage) au moins une rainure 32, 33, 34, 35 de forme partiellement complémentaire à ladite au moins une entretoise 28, 29, 30, 31.

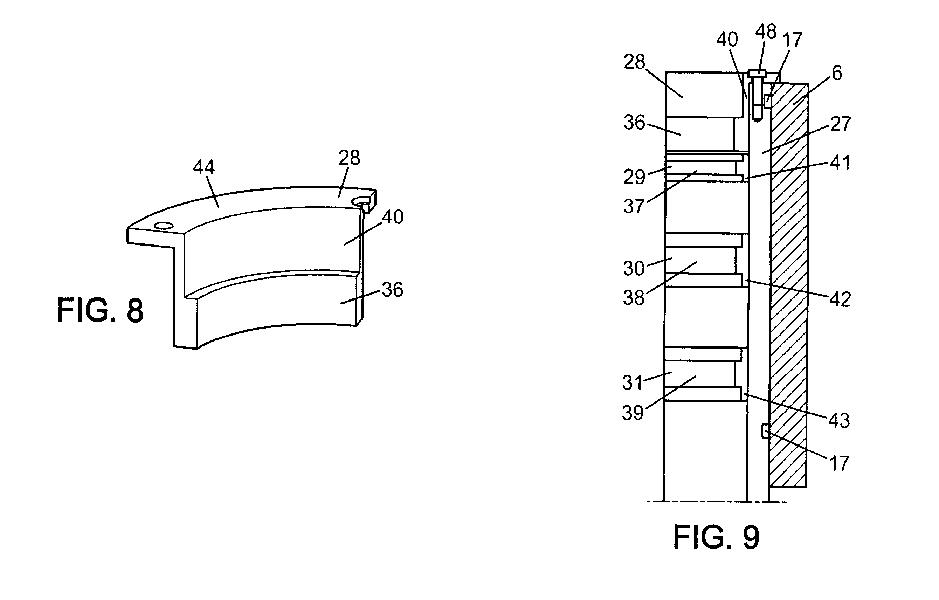

Selon la forme de réalisation de l'invention illustrée sur les figures, il est prévu une première entretoise 28, représentée selon une vue en perspective de manière plus précise à la figure 8, apte à se solidariser par complémentarité partielle dans une rainure 32 prévue sur la surface 25a extérieure de la coquille 25. Il est également prévu une seconde entretoise 29, une troisième entretoise 30 et une quatrième entretoise 31 toutes respectivement aptes à se solidariser par complémentarité partielle dans une rainure 33, 34, 35 formée dans la surface 25a extérieure de la coquille 25.

De manière générale, chaque entretoise 28, 29, 30, 31 comprend respectivement une partie 36, 37, 38, 39 saillante apte à se loger par complémentarité dans une rainure 32, 33, 34, 35 de la surface 25a extérieure de la coquille 25 ainsi qu'une partie 40, 41, 42, 43 formant interface entre la coquille 25 et le porte-coquille 27, la partie 40, 41, 42, 43 formant interface étant à épaisseur sensiblement constante.

Préférentiellement, l'entretoise 28, 29, 30, 31 s'étend sensiblement radialement en périphérie de la coquille 25 et/ou est de forme au moins partiellement annulaire.

La première entretoise 28, telle qu'illustrée sur la figure 8, comprend une partie 44 s'étendant sensiblement radialement apte à être fixée sur une extrémité du porte-coquille 27.

De manière supplémentaire, il est également prévu une entretoise 45 longitudinale fixée sur une coquille 25 d'un demi-moule 3 et apte à venir en appui contre le porte-coquille 26 de l'autre demi-moule 2 lors de la fermeture des deux demi-moules 2, 3 l'un contre l'autre. Pour ce faire, l'entretoise 45 longitudinale comprend au moins une saillie 46 apte à se loger par complémentarité dans au moins un creusement 47 prévu dans la surface 25a extérieure de la coquille 25.

Par ailleurs, il convient de noter que les entretoises 28, 29, 30, 31, 45 sont fixées sur la coquille 25 et/ou sur le porte-coquille 27 à l'aide de moyens 48 de vissage (voir figure 9 pour les moyens 47 de vissage de la première entretoise 28 sur le porte-coquille 27).

Ainsi, selon l'invention, il est possible de modifier rapidement et simplement les coquilles 24, 25 des demi-moules 2, 3 en ajoutant ou en enlevant les entretoises 28, 29, 30, 31 fixées de manière amovible sur le porte-coquille 26, 27.

## Revendications

1. Dispositif de moulage de récipients, notamment de bouteilles, en matière thermoplastique telle que du PET par soufflage ou étirage-soufflage de préformes chauffées, lequel dispositif de moulage comportant au moins un moule (1) comprenant au moins deux demi-moules (2, 3) comportant respectivement deux supports (5, 6) et deux blocs (7, 8) de moule définissant un plan (P) de joint en position de fermeture du moule, chaque bloc (7, 8) de moule comprenant une coquille (24, 25) dans laquelle est réalisée une empreinte formant partiellement la cavité (9) de moulage et un porte-coquille (26, 27) fixé sur ledit support (5, 6) respectif du bloc (7, 8) de moule, **caractérisé en ce que** le dispositif comporte des moyens de modification des caractéristiques dimensionnelles de la cavité (9) de moulage, lesdits moyens de modification comprennent au moins une entretoise (28, 29, 30, 31) amovible prévue entre ladite coquille (24, 25) et ledit porte-coquille (26, 27).

2. Dispositif selon la revendication 1, dans lequel les moyens de modification sont propres à modifier la cavité de moulage sans nécessité d'intervention sur les supports (5, 6) et les porte-coquilles (26, 27).

3. Dispositif selon l'une quelconque des revendications 1 et 2, dans lequel les moyens de modification des caractéristiques dimensionnelles de la cavité comprennent une entretoise radiale de sorte que lorsque l'entretoise radiale est montée entre ladite coquille (24, 25) et ledit porte-coquille (26, 27), la dimension radiale de la cavité (9) est réduite.

4. Dispositif selon l'une quelconque des revendications 1 à 3, **caractérisé en ce que** ladite coquille (24, 25) comprend une surface (25a) extérieure dans laquelle est formée au moins une rainure (32, 33, 34, 35) de forme partiellement complémentaire à ladite au moins une entretoise (28, 29, 30, 31).

5. Dispositif selon l'une quelconque des revendications 1 à 3, **caractérisé en ce que** ladite au moins une entretoise (28, 29, 30, 31) comprend une partie (36, 37, 38, 39) saillante apte à se loger par complémentarité dans une rainure (32, 33, 34, 35) de la surface (25a) extérieure de la coquille (24, 25) ainsi qu'une partie (40, 41, 42, 43) formant interface entre ladite coquille (24, 25) et ledit porte-coquille (26, 27).

6. Dispositif selon la revendication 5, **caractérisé en ce que** ladite partie (40, 41, 42, 43) formant interface est à épaisseur sensiblement constante.

7. Dispositif selon l'une quelconque des revendications 1 à 6, **caractérisé en ce que** ladite au moins une entretoise (28, 29, 30, 31) s'étend sensiblement radialement en périphérie de ladite coquille (24, 25).

8. Dispositif selon l'une quelconque des revendications 1 à 7, **caractérisé en ce que** ladite au moins une entretoise (28, 29, 30, 31) est de forme au moins partiellement annulaire.

9. Dispositif selon l'une quelconque des revendications 1 à 8, **caractérisé en ce que** ladite au moins une entretoise (28) comprend une partie (44) s'étendant sensiblement radialement fixée sur une extrémité dudit porte-coquille (26, 27).

10. Dispositif selon l'une quelconque des revendications 1 à 9, **caractérisé en ce qu'**il comprend au moins une entretoise (45) longitudinale fixée sur une coquille (25) d'un demi-moule (3) et apte à venir en appui contre ledit porte-coquille (26) de l'autre demi-moule (2) lors de la fermeture des deux demi-moules (2, 3) l'un contre l'autre.

11. Dispositif selon la revendication 10, **caractérisé en ce que** ladite entretoise (45) longitudinale comprend au moins une saillie (46) apte à se loger par complémentarité dans au moins un creusement (47) prévu dans la surface (25a) extérieure de ladite coquille (25).

12. Dispositif selon l'une quelconque des revendications 1 à 11, **caractérisé en ce que** ladite au moins une entretoise (28, 29, 30, 31, 45) est fixée sur ladite coquille (24, 25) et/ou sur ledit porte-coquille (26, 27) à l'aide de moyens (48) de vissage.

## Claims

1. Device for moulding containers, in particular bottles, from a thermoplastic material such as PET by blow-moulding or stretch blow-moulding of heated preforms, such moulding device comprising at least one mould (1) comprising at least two mould halves (2, 3) respectively comprising two supports (5, 6) and two mould blocks (7, 8) defining a joint plane (P) in the closed position of the mould, each mould block (7, 8) comprising a shell (24, 25) in which an impression is made partly forming the moulding cavity (9) and a shell-holder (26, 27) fixed to the respective support (5, 6) of the mould block (7, 8), **characterised in that** the device comprises means of modifying the dimensional characteristics of the moulding cavity (9), said modification means comprising at least one removable spacer (28, 29, 30, 31) provided between said shell (24, 25) and said shell-holder (26, 27).

2. Device according to claim 1, **characterized in that** the modification means are capable of modifying the moulding cavity without the need for intervention on the supports (5, 6) and the shell-holders (26, 27).

3. Device according to any one of claims 1 to 2, **characterized in that** the means of modifying the dimensional characteristics of the cavity comprise a radial spacer so that when the radial spacer is mounted between said shell (24, 25) and said shell-holder (26, 27), the radial dimension of the cavity (9) is reduced.

4. Device according to any one of claims 1 to 3, **characterised in that** said shell (24, 25) comprises an external surface (25a) in which is formed at least one groove (32, 33, 34, 35) with a shape at least partly complementary to said at least one spacer (28, 29, 30, 31).

5. Device according to any one of claims 1 to 3, **characterised in that** said at least one spacer (28, 29, 30, 31) comprises a protruding part (36, 37, 38, 39) capable of being housed by complementarity in a groove (32, 33, 34, 35) of the external surface (25a) of the shell (24, 25) as well as a part (40, 41, 42, 43) forming an interface between said shell (24, 25) and said shell-holder (26, 27).

6. Device according to claim 5, **characterised in that** said part (40, 41, 42, 43) forming an interface has an approximately constant thickness.

7. Device according to any one of claims 1 to 6, **characterised in that** said at least one spacer (28, 29, 30, 31) extends approximately on the periphery said shell (24, 25).

8. Device according to any one of claims 1 to 7, **characterised in that** said at least one spacer (28, 29, 30, 31) is at least partly annular.

9. Device according to any one of claims 1 to 8, **characterised in that** said at least one spacer (28) comprises a part (44) extending approximately radially and fixed to one end of said shell-holder (26, 27).

10. Device according to any one of claims 1 to 9, **characterised in that** it comprises at least one longitudinal spacer (45) fixed to a shell (25) of a mould half (3) and capable of resting against said shell-holder (26) of the other mould half (2) when the two mould halves (2, 3) are closed against each other.

11. Device according to claim 10, **characterised in that** said longitudinal spacer (45) comprises at least one protrusion (46) capable of being housed by complementarity in at least one groove (47) made in the external surface (25a) of said shell (25).

12. Device according to any one of claims 1 to 11, **characterised in that** said at least one spacer (28, 29, 30, 31, 45) is fixed to said shell (24, 25) and/or said shell-holder (26, 27) using means of screwing (48).

## Patentansprüche

1. Formvorrichtung für Behälter, insbesondere für Flaschen, aus thermoplastischem Material, wie zum Beispiel aus PET, über Blasformen oder Streck-Blasziehen von erwärmten Vorformlingen, die Formvorrichtung mindestens eine Form (1) umfassend, die mindestens zwei Formhälften (2, 3) aufweist, jeweils zwei Halter (5, 6) und zwei Formblöcke (7, 8) umfassend, die eine Verbindungsebene (P) in der geschlossenen Stellung der Form definieren, jeder Formblock (7, 8) eine Kokille (24, 25) aufweisend, in der ein Eindruck eingebracht ist, der teilweise den Formhohlraum (9) bildet und eine Scharnierkokille (26, 27), die am Halter (5, 6) des jeweiligen Formblocks (7, 8) befestigt ist, **dadurch gekennzeichnet, dass** die Vorrichtung Mittel zur Modifizierung der charakteristischen Abmessungen des Formhohlraums (9) umfasst, wobei die Mittel zur Modifizierung mindestens ein abnehmbar vorgesehenes Abstandsstück (28, 29, 30, 31) zwischen der Kokille (24, 25) und der Scharnierkokille (26, 27) aufweisen.

2. Vorrichtung gemäß Anspruch 1, bei der die Mittel zur Modifizierung charakteristisch für das Modifizieren des Formhohlraums sind, ohne Notwendigkeit eines Eingriffs bei den Haltern (5, 6) und den Scharnierkokillen (26, 27).

3. Vorrichtung nach einem der Ansprüche 1 oder 2, wobei die Mittel zur Modifizierung der charakteristischen Abmessungen des Hohlraums ein derartiges radiales Abstandsstück aufweist, dass wenn das radiale Abstandsstück zwischen der Kokille (24, 25) und der Scharnierkokille (26, 27) montiert ist, die radiale Abmessung des Hohlraums (9) reduziert ist.

4. Vorrichtung gemäß einem der Ansprüche 1 bis 3, **dadurch gekennzeichnet, dass** die Kokille (24, 25) eine äußere Oberfläche (25a) aufweist, in der mindestens eine Nut (32, 33, 34, 35) ausgebildet ist, teilweise komplementär zu dem mindestens einen Abstandsstück (28, 29, 30, 31).

5. Vorrichtung gemäß einem der Ansprüche 1 bis 3, **dadurch gekennzeichnet, dass** das mindestens eine Abstandsstück (28, 29, 30, 31) einen hervorstehenden Abschnitt (36, 37, 38, 39) aufweist, geeignet zur komplementären Aufnahme in einer Nut (32, 33, 34, 35) der äußeren Oberfläche (25a) der Kokille (24, 25), so dass ein Abschnitt (40, 41, 42, 43) eine Schnittstelle zwischen der Kokille (24, 25) und der Scharnierkokille (26, 27) bildet.

6. Vorrichtung gemäß Anspruch 5, **dadurch gekennzeichnet, dass** der Schnittstellen bildende Abschnitt (40, 41, 42, 43) eine im Wesentlichen konstante Dicke aufweist.

7. Vorrichtung gemäß einem der Ansprüche 1 bis 6, **dadurch gekennzeichnet, dass** sich das mindestens eine Abstandsstück (28, 29, 30, 31) im Wesentlichen radial im Randbereich der Kokille (24, 25) erstreckt.

8. Vorrichtung gemäß einem der Ansprüche 1 bis 7, **dadurch gekennzeichnet, dass** das mindestens eine Abstandsstück (28, 29, 30, 31) zumindest teilweise ringförmig ausgebildet ist.

9. Vorrichtung gemäß einem der Ansprüche 1 bis 8, **dadurch gekennzeichnet, dass** das mindestens eine Abstandsstück (28) einen Abschnitt (44) aufweist, der sich im Wesentlichen radial erstreckt, befestigt an einem Ende der Scharnierkokille (26, 27).

10. Vorrichtung gemäß einem der Ansprüche 1 bis 9, **dadurch gekennzeichnet, dass** sie mindestens ein längliches Abstandsstück (45) aufweist, an einer Kokille (25) einer Formhälfte (3) befestigt und geeignet, um bei dem Verschluss der zwei Formhälften (2, 3) gegeneinander an der Scharnierkokille (26) der anderen Formhälfte (2) anzuliegen.

11. Vorrichtung gemäß Anspruch 10, **dadurch gekennzeichnet, dass** das längliche Abstandsstück (45) mindestens einen Vorsprung (46) aufweist, geeignet zur komplementären Aufnahme innerhalb mindestens einer Vertiefung (47), vorgesehen in der äußeren Oberfläche (25a) der Kokille (25).

12. Vorrichtung gemäß einem der Ansprüche 1 bis 11, **dadurch gekennzeichnet, dass** das mindestens eine Abstandsstück (28, 29, 30, 31, 45) an der Kokille (24, 25) und/oder an der Scharnierkokille (26, 27) mit dem Mittel (48) zum Verschrauben befestigt ist.
